Europäisches Patentamt

European Patent Office

Office européen des brevets

(19)

(11) Publication number: **0 060 579**
**B1**

# (12) EUROPEAN PATENT SPECIFICATION

(45) Date of publication of patent specification: **09.04.86**

(51) Int. Cl.⁴: **C 08 L 77/00**

(21) Application number: **82200226.7**

(22) Date of filing: **24.02.82**

(54) **Use of polyamide moulding compounds in processes for injection moulding objects of high impact strength.**

(30) Priority: **16.03.81 NL 8101262**

(43) Date of publication of application:
**22.09.82 Bulletin 82/38**

(45) Publication of the grant of the patent:
**09.04.86 Bulletin 86/15**

(84) Designated Contracting States:
**BE DE FR GB NL SE**

(56) References cited:
**FR-A-1 567 660**
**CHEMICAL ABSTRACTS, vol. 77, 1972, page 83, no. 153713z, Columbus Ohio (USA);**
**CHEMICAL ABSTRACTS, vol. 85, 1976, page 49, no. 178664n, Columbus Ohio (USA);**
**CHEMICAL ABSTRACTS, vol. 88, 1978, page 60, no. 153869g, Columbus Ohio (USA);**
**DR. RICHARD VIEWEG et al.: "Kunststoff-Handbuch", vol. VI, "Polyamide", 1966, Carl Hanser Verlag, Munchen, DE.**
**CHEMICAL ABSTRACTS, vol. 87, 1977, page 56, no. 137155v, Columbus Ohio (USA); K. ITOYAMA: "Fine structure and electrical conductivity of nylon 6/block-polyether-amide blend fibers"**

(73) Proprietor: **AKZO N.V.**
**Velperweg 76**
**NL-6824 BM Arnhem (NL)**

(72) Inventor: **Cohen, Jacob Louis**
**Surinkhof 21**
**NL-6952 HT Dieren (NL)**
Inventor: **Sikkema, Doetze Jakob**
**Kastanjelaan 30**
**NL-6955 AN Ellecom (NL)**
Inventor: **van Berkel, Reinier Willem Marcel**
**Kruigang 2**
**NL-6852 BM Huissen (NL)**

(74) Representative: **Sieders, René et al**
**P.O. Box 314**
**NL-6800 AH Arnhem (NL)**

Courier Press, Leamington Spa, England.

**Description**

The invention relates to the use of a thermoplastic polymer compound in an injection moulding process for moulding objects having a high impact strength wherein the moulding compound comprises polyamide 6 and/or 66 in which there is dispersed a thermoplastic copolymer in an amount of 1—50% by weight, calculated on the polymeric constituents of the moulding compound.

To improve the impact strength of objects injection moulded from polyamide 6 and 66 various steps have been proposed. In a process to that end described in Netherlands Patent Specification 52 648 thermoplastic rubbers, int. al., are mixed into the polyamide. A disadvantage is the poor intermiscibility of the two components, which in the processing to mouldings leads to unsatisfactory results because of demixing.

A process to the same end described in British Patent Specification 998 439 comprises mixing a copolymer of an unsaturated organic acid and an alkene in an amount of 1—50% by weight, based on the mixture, into, int. al., polyamide 6 and 66, the finely divided copolymer particles being attached to the polyamide chains by the acid groups in the copolymer. In this way the intermiscibility of the two components is improved and demixing during processing into mouldings is suppressed.

United States Patent Specification 4 174 358 describes a process in which the impact strength of polyamide mouldings may be improved upon adding at least one copolymer selected from a class of copolymers, which are however not segmented. The copolymers proposed should have sites which adhere to the polyamide matrix, the particles should measure 0,01 to 1,0 μm, and moreover the modulus of the copolymer should still satisfy particular requirements.

British Patent Specification 948 507 describes segmented polyether-polyamide copolymers containing 5—15% by weight of polyether segments in their chains, which copolymers are to be spun into textile filaments having antistatic properties. The copolymers are prepared by polycondensation of a mixture of poly(alkylene oxide) having amine endgroups, an equimolar amount of a dicarboxylic acid, and caprolactam or equimolar amounts of an aliphatic $\alpha,\omega$-diamine and an $\alpha,\omega$-dicarboxylic acid. The examples deal with a segmented copolymer of which the polyether segments are derived from poly(ethylene oxide) diamine.

British Patent Specification 1 108 812 relates to similar segmented polyether-polyamide copolymers. They are considered suitable to be processed into filaments and other articles having elastic properties. As in the procedure described in British Patent Specification 948 507, these polymers are obtained by polycondensation. As examples of suitable poly(alkylene oxide) diamines are mentioned the derivatives of ethylene, propylene and butylene. The amount of polyether contained in the segmented copolymer is in the range of about 10—95% by weight.

Although the mouldings from the afore-mentioned segmented copolymers exhibit good toughness, their other mechanical properties, such as tensile strength, flexural strength, modulus and stiffness are at such a low level that they are unsuitable for technical uses. In actual practice these copolymers therefore find no application in injection moulding processes. Especially injection moulded objects, which often have an intricate shape, are to satisfy high requirements as regards mechanical properties on the one hand and problem-free processability on the other.

United States Patent Specification 3 549 724 relates to a moulding compound to be processed into shaped articles having antistatic properties. These objects are mainly filaments. They are obtained by extrusion. The moulding compound consists of a mixture of a polyamide such as nylon 6 or 66 and a segmented polyether-polyamide copolymer, the polyether segments forming 15—70% by weight of the copolymer and at the same time 0.1—20% by weight, preferably less than 10% by weight, of the mixture, each polyether segment having at least 45 oxgyen atoms. Although it is mentioned that this composition is generally suitable to be melt-processed into shaped articles, it is actually meant to be extruded into articles such as filaments that have good antistatic properties. Nothing is said at all about such a composition being injection moulded into mouldings and about the mechanical properties of such mouldings.

The French Patent Specification 1 567 660 describes composite filaments having antistatic properties from compositions comprising blends of nylon 6 and block copolymers of $\alpha,\omega$-poly(propylene oxide)diamine, dicarboxylic acid and $\varepsilon$-caprolactam. Nothing is, however, said about the addition of lubricants to such blends nor their use for injection moulding.

However, melt shaping, more particularly injection moulding, the compositions mentioned in said United States Patent Specification 3 549 724 and in said French Patent Specification 1 567 660, into moulded objects will be attended with great difficulties.

Especially the flow of these moulding compounds through the mould channels is poor; their adhesion to the mould walls is so strong that the mould cannot be perfectly filled and when the moulding compound has solidified, it cannot be sufficiently released. This drawback increases in significance as the shape of the mould becomes more intricate and elaborate.

It has now been found that a moulding compound based on polyamide 6 or 66 or a blend of these two polyamides, in which there is uniformly distributed some amount of a segmented copolymer containing poly(propylene oxide) segments and polyamide 6 segments, and in which there are incorporated one or more suitable additives, can be injection moulded into shaped objects which display a surprisingly high impact strength in the dry state and at a low to very low temperature. Moreover, it has been found that the

2

impact strength of shaped articles made from the afore-mentioned blend of polyamide and the segmented copolymer of poly(propylene oxide) and polyamide is considerably higher than that of shaped articles that entirely consist of a segmented copolymer of poly(propylene oxide) and polyamide and in which the same amount of poly(propylene oxide) is present as in the blend. In addition, it has been found that in the injection moulding process the moulds are yet satisfactorily filled and the shaped articles can be rapidly released when use is made of a lubricant suitable for polyamide.

The invention is characterized in that

A the copolymer is a segmented polyether-polyamide copolymer prepared by polycondensation of $\alpha,\omega$-poly(propylene oxide)diamine having a molecular weight in the range of 400 to 4000 and a substantially equimolar amount of dicarboxylic acid, and polyamide forming monomers, at least 50% by weight of which consists of caprolactam, and in which the polyether segments from 10—80% by weight of the copolymer, and the copolymer has a relative viscosity of 2.0—3.5, measured on a solution of 1 g of polymer in 100 g of m-cresol at 25°C;

B in the moulding compound there is blended 0.1—5% by weight of a lubricant for the injection moulding of polyamide.

Examples of suitable polyamide forming monomers include, in addition to caprolactam, lauryl lactam, and $\omega$-aminocarboxylic acids, diamines such as hexamethylene diamine, and dicarboxylic acids such as adipic acid, sebacic acid. Preference is given to polyamide segments formed from caprolactam.

A preferred dicarboxylic acid is adipic acid, but also suitable for use in polyamide forming reactions are other diacids, such as caprylic acid, azelaic acid, dodecanedioic acid, terephthalic acid.

It is essential that the ether segments of the copolymer should be formed of poly(propylene oxide). Although some improvement of impact strength is obtained when segmented copolymers of other poly(alkylene oxides) and polyamide are mixed into polyamide 6 or 66, this effect is by far the greatest with the copolymer containing poly(propylene oxide) segments.

The process according to the invention provides shaped objects having a greatly improved impact strength. This improvement is maintained even at low temperature. In this respect the effect of the segmented copolymer is far more favourable than can be obtained by adding an equal amount of acid copolymer, as described, among other places, in the afore-mentioned British Patent Specification 998 439. It appears that at a temperature of 0°C or lower the acid copolymer no longer has any effect on the impact strength of the polyamide. On the other hand, adding the poly(propylene oxide)polyamide copolymer results in a strongly positive effect even at −40°C. Indeed, with some compositions, the impact strength at −40°C does not decrease yet to half that prevailing at 23°C.

Adding only a few per cent of the poly(propylene oxide)polyamide copolymer will, of course, result in a slight improvement of the impact strength of the polyamide. It is true that by increasing the proportion to over 50% by weight a higher impact strength will be obtained; but in that case other important mechanical properties such as tensile strength and modulus will no longer be at a sufficiently high level for technical applications. Preference is given to an amount of 1—25% by weight, more particularly 5—15% by weight of the segmented copolymer in the polymer mixture, the copolymer containing 30—70% by weight of polyether segments. It is preferred that the length of the polyether segments in the copolymer should be such that it corresponds to a molecular weight of the $\alpha,\omega$-poly(propylene oxide)diamine used of 1500 to 2500. The relative viscosity of the copolymer is preferably in the range of 2,2 to 3,0, measured on a solution of 1 g of poly(propylene oxide)polyamide copolymer in 100 g m-cresol at 25°C. The relative viscosity of the polyamide is in the range of 2,0 to 4,0 and preferably 2.2 to 3.0, measured on a solution of 1 ml of polyamide in 100 g of 90%-formic acid at 25°C.

For use in the injection moulding of polyamide moulding compounds suitable lubricants are known. Preference is given to higher fatty acids, derivatives of higher fatty acids, such as metal stearates, amidated fatty acids, esters of fatty acids and fatty alcohols. In injection moulding polyamide moulding compounds containing 1—50% by weight of the segmented poly(propylene oxide)polyamide 6 copolymer very good results are obtained when use is made of Ca-stearate and cetyl alcohol. As a rule, the lubricant may be used in an amount of as little as 0.1—2% by weight.

Vieweg-Müller's Kunststoff Handbuch 1966, Bd. VI "Polyamide", pages 239 and 244, refers to lubricants known to be used for the injection moulding of polyamides.

It has been found that processability by injection moulding may still be improved, while retaining such favourable mechanical properties as high impact strength, if the moulding compound also contains 0.01 to 2.0% by weight of a solid having an average particle size smaller than 5 μm. Suitable to that end are, int. al., high-melting polyamides, metal oxides, metal salts, metal stearates and silicates. A list of suitable substances is given on page 245 of Vieweg-Müller's Kunststoff Handbuch 1966, Bd. VI". These substances may be incorporated into the polyamide and dispersed in it before, at the same time as or after the copolymer is added to it. It is preferred that these substances should be blended with the polyamide granulate together with the lubricant and simultaneously with the polyether-polyamide copolymer granulate, after which the resulting mixture is homogenized by melt extrusion. Incorporating the polyether-polyamide copolymer into the polyamide 6 or 66 can be effected in a simple manner by melt blending in equipment such as a single-screw or twin-screw extruder. The lubricants may be incorporated into the moulding compound together with the copolymer by simultaneously feeding the polyamide, the copolymer and the lubricants to the filling hole of a compounding extruder and homogenizing the blend in the melt. The lubricants also may be uniformly distributed over the surface of the granules formed from the blend of the polyamide and the segmented copolymer. In the usual manner other additives may be incorporated into the moulding compound: examples thereof include flame-extinguishing or flame-retardant agents, heat and UV-stabilizers, and fillers such as talc, kaolin, chalk, wollastonite, glass beads, glass fibres, and mixtures of these fillers, such as that of glass fibres and talc. Compositions having a great toughness, even at low temperature, as well as a high stiffness and strength are prepared if in the compositions there is uniformly distributed 5—50% by weight of filler, for instance: talc. The invention will be illustrated in the following examples.

Example 1

A blend of 29700 g of α,ω-poly(propylene oxide)diamine having a molecular weight of about 2000, commercially available under the RTM "Jeffamine D-2000®", which is supplied by Texaco, 2190 g of adipic acid and 29700 g of ε-caprolactam. 300 g of heat stabilizer available under the RTM Irganox 1098® which is based on 1,6-bis[3(3,5-di tert. butyl-4-hydroxyphenyl)propionamido]hexane, and which is supplied by Ciba-Geigy and 100 g of 85%-phosphoric acid is subjected to polycondensation in an autoclave under an atmosphere of nitrogen over a period of 8 hours at about 225°C. The resulting product is rapidly cooled in water and chopped into a granulate which is washed with hot water for 20 hours to extract the low-molecular-weight components, and subsequently dried for 20 hours at 120°C. 10 hours of which at 16 mbar followed by 10 hours at 2 mbar. The resulting copolymer has a relative viscosity of 2,30, measured on a solution of 1 g of polymer in 100 g of m-cresol at 25°C and contains about 55% by weight of polyether segments.

Different portions of this granulate together with polyamide 6 granules are fed to a twin-screw extruder and the extrudate obtained is successively cooled in water and chopped into granules. The polyamide 6 has a relative viscosity of 2,35, measured on a solution of 1 g of polyamide in 100 ml of 90%-formic acid at 25°C.

Of the resulting moulding compositions test bars are made on a reciprocating screw-injection moulding machine and the impact strength, flexural modulus and flexural strength are determined. Moreover, of the moulding compound the so-called spiral-flow length is determined, which is a measure of the degree to which the compound fills out the injection mould. Said properties are determined under the following conditions. The impact strength is determined in conformity with ISO R 179 in the dry state at 23°C, i.e. immediately upon injection moulding the test bars and in some cases at −20°C and −40°C.

The flexural modulus and the flexural strength are determined in accordance with ISO R 178.

The spiral-flow length is determined in accordance with the method described in an article by L. Griffiths in Modern Plastics 34 (1957) No. 12, p. 111.

In actual practice moulding compounds having a spiral-flow length smaller than 65 cm are difficult to process. As a rule, a spiral-flow length greater than 65 cm is required.

Moulding compounds having a spiral-flow length in the range of 90—100 cm are generally excellently processable also in intricate injection moulds.

Table 1 gives the values found.

TABLE 1

Properties of a blend of polyamide 6 (PA 6) and segmented
poly(propylene oxide)polyamide 6 copolymer (cop.)

| | Charpy notched impact strength kJ/m² dry | | | Flexural modulus MPa | Flexural strength MPa | Spiral-flow length cm |
|---|---|---|---|---|---|---|
| | 23°C | −20°C | −40°C | | | |
| 100% PA 6 | 7,4 | 5,2 | | 2680 | 84 | 77 |
| 95% PA 6+5% cop. | 10,2 | 8,0 | | 2450 | 76 | 54 |
| 90% PA 6+10% cop. | 14,2 | 10,1 | 7,9 | 2380 | 73 | 48 |
| 85% PA 6+15% cop. | 18,8 | 12,0 | 9,9 | 2190 | 66 | 42 |

% is per cent by weight

Although the addition of the copolymer leads to a considerable increase in impact strength, it appears that the other properties, and more particularly the spiral-flow length, which is characteristic of the filling capacity, will drop to an unsatisfactory level. For this reason, the material containing more than 5% copolymer will be unsuitable for use as injection moulding compound. Moreover, the mouldings do not readily release from the moulds in that they stick to them.

Example 2

In the manner described in Example 1 the copolymer is blended with polyamide 6 having a ηrel of 2,35. Together with the copolymer a lubricant is added in an amount of 0,5% by weight, based on the blend. The blends are injection moulded into test bars.

TABLE 2

Properties of a blend of polyamide 6 (PA 6) and segmented poly(propylene oxide)polyamide 6 copolymer (cop.) to which there was added a lubricant in an amount of 0,5% by weight, based on the blend

|  | Charpy notched impact strength kJ/m² dry 23°C | Flexural modulus MPa | Flexural strength MPa | Spiral-flow length cm |
|---|---|---|---|---|
| PA 6 cont. |  |  |  |  |
| 5% cop.+0,5% Ca-stearate | 8,8 | 2540 | 76 | 89 |
| 10% cop.+ " | 11,0 | 2370 | 72 | 79 |
| 15% cop.+ " | 16,6 | 2190 | 66 | 86 |
| PA 6 cont. |  |  |  |  |
| 5% cop.+0,5% cetyl alcohol | 11,1 | 2550 | 77 | 76 |
| 15% cop.+ " | 20,3 | 2180 | 63 | 69 |

These results show that the lubricants added lead to a considerable increase in spiral-flow length, although the impact strength values obtained are somewhat lower, they are still at a very much improved level. Mould release is quite satisfactory.

Example 3

The procedure of Example 2 is repeated in such a way that 10% by weight of the copolymer is blended into polyamide 6 having a relative viscosity of 2,20. Into the blend there is dispersed 0,2% by weight of microtalc having an average particle size smaller than 5 μm. The microtalc is fed to the autoclave along with the monomers for the segmented copolymer. Table 3 gives the values found.

TABLE 3

Properties of the blend of 90% by weight of polyamide 6 (PA 6) and 10% by weight of segmented poly(propylene oxide)polyamide 6 copolymer (cop.), which blend contains 0,2% by weight of microtalc and 0,5% by weight of lubricant

|  | Charpy notched impact strength kJ/m² dry | | Flexural modulus MPa | Flexural strength MPa | Spiral-flow length cm |
|---|---|---|---|---|---|
|  | 23°C | −20°C |  |  |  |
| 90% PA 6+10% cop. cont. 0,2% microtalc and | 10,5 | 9,1 | 2290 | 68 | 65 |
| 0,5% cetyl alcohol | 10,8 | 9,3 | 2300 | 69 | 82 |
| 0,5% stearylamine | 9,3 | 7,8 | 2260 | 63 | 81 |
| 0,5% Ca-stearate | 10,0 | 8,5 | 2135 | 65 | 103 |
| 100% PA 6 (no additives) | 6,0 | 3,7 | 2440 | 74 | 83 |

As in the case of Example 2, in Example 3, too, the presence of the lubricants is found to have a favourable effect on the spiral-flow length. Mould release of the products of Example 3 is excellent. Because of these two additives injection moulding proceeds very well and their use does not detract from the other mechanical properties such as impact strength. The favourable properties, more particularly the impact strength at −20°C, become manifest especially upon comparison with the values of 100%-polyamide 6 mouldings.

Example 4

In a twin-screw extruder blends are prepared of polyamide 66 having a relative viscosity of 2,20 and 10% by weight of the copolymer made in accordance with Example 1, in which blends there are incorporated respectively 0,1 and 0,2% by weight of microtalc having an average particle size smaller than 5 μm. The microtalc has been added at the start of polycondensation of the copolymer. The properties of the test bars injection moulded from these blends are compared with those made from the same blends after 0,5% by weight of the lubricant Ca-stearate has been blended into them by re-extrusion of part of the blends. Mould release is excellent.

TABLE 4

Properties of the blends of PA 66, copolymer, microtalc and lubricant

| PA 66 with additive(s) | Charpy notched impact strength kJ/m² dry 23°C | Flexural modulus MPa | Flexural modulus MPa | Spiral-flow length cm |
|---|---|---|---|---|
| none | 3,6 | 2960 | 95 | 84 |
| 10% cop. and 0,1% microtalc | 8,6 | 2670 | 84 | 59 |
| 10% cop. and 0,2% microtalc | 8,9 | 2680 | 84 | 58 |
| 0,5% Ca-stearate | 5,3 | 2910 | 90 | 96 |
| 10% cop. 0,1% microtalc 0,5% Ca-stearate | 9,5 | 2660 | 84 | 102 |
| 10% cop. 0,2% microtalc 0,5% Ca-stearate | 9,7 | 2650 | 85 | 97 |

The values found show the favourable influence of the additives in the polyamide 66 on the mechanical properties, more particularly the combination of high impact strength and satisfactory processing properties in injection moulding.

Example 5

In accordance with the procedure of Example 1 two batches of segmented copolymer are prepared containing 37% by weight of polyether segments derived from Jeffamine D 2000®.

The relative viscosity of the first batch is 2,26. The second batch moreover contains 1% by weight of microtalc (average particle size smaller than 5 μm) and has a relative viscosity of 2,55. These compositions are extruded into blends with polyamide 6 having relative viscosities of 2,20 and 2,35, respectively. To some portions of these blends 0,5% by weight of Ca-stearate is added. These compositions are injection moulded into test bars of which subsequently the properties are determined. The shaped objects containing microtalc and Ca-stearate display excellent mould release.

Table 5 gives the values found.

6

TABLE 5

Mechanical properties of some blends of polyamide 6 and segmented polyether polyamide

| PA 6+10% cop. cont. 37% PPO-segments | Ca-stearate % | Charpy notched impact strength kJ/m² dry 23°C | Flexural modulus MPa | Flexural strength MPa | Spiral-flow length cm |
|---|---|---|---|---|---|
| PA 6 η rel 2,20 | | | | | |
| microtalc 0% | 0 | 9,6 | 2520 | 73 | 67 |
| 0% | 0,5 | 7,0 | 2550 | 74 | 100 |
| 0,1% | 0 | 9,0 | 2490 | 71 | 65 |
| 0,1% | 0,5 | 8,9 | 2510 | 71 | 102 |
| PA 6 η rel 2,35 | | | | | |
| microtalc 0% | 0 | 8,5 | 2600 | 80 | 50 |
| 0% | 0,5 | 6,5 | 2460 | 73 | 87 |
| 0,1% | 0 | 9,4 | 2580 | 78 | 48 |
| 0,1% | 0,5 | 8,8 | 2500 | 76 | 86 |

PPO is poly(propylene oxide)

Upon comparison with the values of Example 2 it is apparent that under otherwise equal conditions the improvement in impact strength decreases with decreasing content of poly(propylene oxide) segments in the co-polymer. The example further shows that the presence of the lubricant results in the moulding compound being satisfactorily processable by injection moulding.

Example 6

In the manner described in Example 1 batches of segmented copolymers are prepared containing, respectively, 6 and 12% by weight of polyether segments derived from Jeffamine D 2000®. 0,5% by weight of microtalc is added. The batch containing 6% by weight of poly(propylene oxide) has a relative viscosity of 2,47 and the one containing 12% by weight of poly(propylene oxide) has a relative viscosity of 2,78. These compositions are injection moulded into test bars whose properties are compared with those of test bars from blends of polyamide 6 and a segmented copolymer which contain polyether segments in the same amount and of the same length.

For the values see Table 6.

# 0 060 579

## TABLE 6

Comparison of properties of segmented copolymers with those of blends
containing about the same amount of polyether segment

|  | Charpy notched impact strength kJ/m² dry 23°C | Flexural modulus MPa | Flexural strength MPa |
|---|---|---|---|
| copolymer PA 6/6% PPO 0,5% microtalc | 6,3 | 2135 | 65 |
| blend PA 6 ηrel 2,20 and 10% cop. cont. 55% PPO and 0,2% microtalc | 10,5 | 2290 | 68 |
| blend PA 6 ηrel 2,35 and 10% cop. cont. 55% PPO no microtalc | 14,2 | 2380 | 73 |
| copolymer PA 6 12% PPO 0,5% microtalc | 10,0 | 1640 | 47 |
| blend PA 6 ηrel 2,20 and 20% cop. cont. 55% PPO and 0,2% microtalc | 12,8 | 2175 | 65 |

PPO: poly(propylene oxide)

The table shows that the mechanical properties of a blend of polyamide and segmented copolymer are superior to those of a segmented copolymer having the same components and containing the same amount of polyether segment. Moreover, of the mechanical properties of some blends the impact strength can be seen to have increased most.

Example 7

To compare the effect on the impact strength of polyamide resulting from the use of various additives blends are preapred by extrusion of batches of polyamide 6 having relative viscosities of 2,20 and 2,30 together with segmented copolymer containing 55% by weight of segments derived from Jeffamine D 2000®.

The properties of the resulting blends are compared with those of two blends of polyamide 6 having a relative viscosity of 2,40 and, respectively, a copolymer of ethylene, acrylic acid and an acrylic ester and a copolymer of ethylene and methacrylic acid partly neutralized with metal ions. Both copolymers are known to be used for increasing the impact strength of polyamide.

8

TABLE 7

Comparison of the influence on the impact strength of polyamide 6 of various additives

| | cetyl alcohol | Charpy notched impact strength kJ/m² dry | | Flexural modulus MPa | Flexural strength MPa | Spiral-flow length cm |
|---|---|---|---|---|---|---|
| | | 23°C | −20°C | | | |
| PA 6 ηrel 2,20 and 10% cop. cont. 55% PPO and 0,2% microtalc | 0 0,5 | 10,5 10,8 | 9,1 9,3 | 2290 2300 | 73 69 | 65 82 |
| PA 6 ηrel 2,35 and 10% cop. cont. 55% PPO and no microtalc | 0 | 14,2 | 10,1 | 2080 | 65 | 48 |
| PA 6 ηrel 2,40 12,5% acid ethylene copolymer | 0 | 13,3 | 4,8 | 2250 | | 56 |
| PA 6 ηrel 2,40 20% partly neutr. acid cop. | 0 | 11,6 | 6,2 | 2300 | | 53 |

From the table it is apparent that the addition of the segmented copolymer, even in samll amounts, has a more favourable effect on the impact strength of polyamide 6 than the relatively large amounts of known additives of the prior art. This particularly applies to the impact strength at a relatively low temperature, even if the blend comprising the segmented polyether-polyamide copolymer contains a lubricant.

Example 8

The mechanical properties are determined of a blend containing 30% by weight of talc. The blend moreover contains a small amount of a silane as coupling agent for the talc.

The segmented poly(propylene oxide)polyamide 6 copolymer is prepared in accordance with Example 1 and has a relative viscosity of 2,35. The polyamide 6 has a relative viscosity of 2,35.

The blend is prepared by adding the components to a twin-screw extruder and extruding at a temperature of 260°C. As lubricant there is added calcium stearate in an amount of 0,3%, based on the amount of polymer. Table 8 gives the values found, including those for the impact strength of an unnotched test bar.

TABLE 8

Mechanical properties of compositions containing 30 wt.% talc

| Polymer comp. | Charpy impact strength kJ/m² dry | | Flexural | | Tensile strength MPa | Elongation at rupture % |
|---|---|---|---|---|---|---|
| | 23°C | −20°C | modulus MPa | strength MPa | | |
| 100% PA 6 | 36,9 | 38,6 | 5990 | 124 | 86 | 2,1 |
| 90% PA 6 10% cop. | 50,9 | 47,4 | 5010 | 103 | 71 | 2,7 |
| 80% PA 6 20% cop. | 73,7 | 57,6 | 4070 | 83 | 62 | 3,8 |

Table 8 shows that the composition has a high toughness both at room temperature and at very low temperature and at the same time exhibits a sufficiently high stiffness and strength.

Example 9

The notched impact strength values of compositions having a polymer composition of 89% by weight of polyamide and 11% by weight of segmented poly(propylene oxide)polyamide 6 copolymer are compared with copolymers having different molecular weights. The polyamide 6 has a relative viscosity of 2,35. The notched impact strength is determined in accordance with ISO/DIS 179 on test bars having a moulded notch and on those having a machined notch. The copolymer is prepared in accordance with the procedure described in Example 1 and has a relative viscosity of 1,97, subsequently, part of the copolymer is subjected to postcondensation in the solid state at a temperature of 165°C and for periods of 11 and 40 hours, respectively. The resulting copolymers have a relative viscosity of 2,35 and 2,67, respectively. As lubricant 0,3% of calcium stearate is added. The values obtained are given in Table 9.

TABLE 9

Notched impact strength values in kJ/m$^2$ of a composition of 89% by weight of PA 6 and 11% by weight of copolymer

| cop. $\eta$rel | Machined notch 23°C | Moulded notch | | |
|---|---|---|---|---|
| | | 23°C | −20°C | −40°C |
| 1,97 | 11,6 | 10,3 | 8,5 | 7,4 |
| 2,35 | 12,3 | 10,5 | 9,8 | 8,4 |
| 2,67 | 13,3 | 11,9 | 10,3 | 9,0 |

Remarkable are the high notched impact strength values even at low and very low temperatures.

## Claims

1. Use of a thermoplastic polymer compound in an injection moulding process for moulding objects having a high impact strength wherein the moulding compound comprises polyamide 6 and/or 66 in which there is dispersed a thermoplastic copolymer in an amount of 1—50% by weight, calculated on the polymeric constituents of the moulding compound, characterized in that:

A the copolymer is a segmented polyether-polyamide copolymer prepared by polycondensation of a,ω-poly(propylene oxide)diamine having a molecular weight in the range of 400 to 4000 and a substantially equimolar amount of dicarboxylic acid, and polyamide forming monomers, at least 50% by weight of which consists of caprolactam, and in which the polyether segments form 10—80% by weight of the copolymer, and the copolymer has a relative viscosity of 2,0—3,5, measured on a solution of 1 g of polymer in 100 g of m-cresol at 25°C;

B in the moulding compound there is blended 0,1—5% by weight of a lubricant for the injection moulding of polyamide.

2. Use of a thermoplastic polymer compound in an injection moulding process according to claim 1, characterized in that the polyamide segments of the copolymer consist of polycaprolactam.

3. Use of a thermoplastic polymer compound in an injection moulding process according to claims 1—2, characterized in that the polymeric part of the moulding compound contains 1—25% by weight of segmented copolymer and the polyether segments form 30—70% by weight of the copolymer.

4. Use of a thermoplastic polymer compound in an injection moulding process according to claims 1—3, characterized in that the a,ω-poly(propylene oxide)diamine has a molecular weight in the range of 1500 to 2500.

5. Use of a thermoplastic polymer compound in an injection moulding process according to claims 1—4, characterized in that as lubricant there is used a substance selected from the group consisting of the higher fatty acids, derivatives of higher fatty acids, such as metal stearates, amidated fatty acids and fatty acid esters and fatty alcohols.

6. Use of a thermoplastic polymer compound in an injection moulding process according to claims 1—5, characterized in that in the moulding compound there is also blended 0,01—2% by weight of a solid having an average particle size smaller than 5 μm.

7. Use of a thermoplastic polymer compound in an injection moulding process according to claims 1—5, characterized in that the lubricants are added to the polyamide and blended therein together with the segmented copolymer.

## Patentansprüche

1. Verwendung einer thermoplastischen Polymermasse in einem Spritzguß-Verfahren zum Formen von Gegenständen mit hoher Schlagzähigkeit, wobei die Formmasse Polyamid 6 und/oder 66 enthält, in

10

**0 060 579**

welchem ein thermoplastisches Mischpolymerisat in einer Menge von 1 bis 50 Gewichtsprozent dispergiert vorliegt, gemessen an den polymeren Bestandteilen der Formmasse dadurch gekennzeichnet, daß

A das Mischpolymerisat ein segmentiertes Polyäther-Polyamid-Mischpolymerisat ist, hergestellt durch Polykondensation eines α,ω-Poly(propylenoxid)diamins mit einem Molekulargewicht im Bereich von 400 bis 4000 und einer im wesentlichen äquimolaren Menge an Dicarbonsäure und Polyamid bildenden Monomeren, welche zu mindestens 50 Gewichtsprozent aus Caprolactam bestehen, und in welchem die Polyäthersegmente 10 bis 80 Gewichtsprozent des Mischpolymerisats bilden, und das Mischpolymerisat eine relative Viskosität von 2,0 bis 3,5, gemessen an einer Lösung von 1 g Polymer in 100 g m-Cresol bei 25°C, hat;

B der Formmasse 0,1 bis 5 Gewichtsprozent eines Schmiermittels für das Spritzgießen des Polyamids beigemischt sind.

2. Verwendung einer thermoplastischen Polymermasse in einem Spritzguß-Verfahren gemäß Anspruch 1, dadurch gekennzeichnet, daß die Polyamidsegmente des Mischpolymerisats aus Polycaprolactam bestehen.

3. Verwendung einer thermoplastischen Polymermasse gemäß Anspruch 1 und 2, dadurch gekennzeichnet, daß der polymere Teil der Formmasse 1 bis 25 Gewichtsprozent an segmentiertem Mischpolymerisat enthält, und die Polyäthersegmente 30 bis 70 Gewichtsprozent des Mischpolymerisats bilden.

4. Verwendung einer thermoplastischen Polymermasse in einem Spritzguß-Verfahren gemäß den Ansprüchen 1 bis 3, dadurch gekennzeichnet, daß das α,ω-Poly(propylenoxid)diamin ein Molekulargewicht im Bereich von 1500 bis 2500 hat.

5. Verwendung einer thermoplastischen Polymermasse in einem Spritzguß-Verfahren gemäß den Ansprüchen 1 bis 4, dadurch gekennzeichnet, daß als Schmiermittel eine Substanz verwendet wird, ausgewählt aus der Gruppe bestehend aus den höheren Fettsäuren, Derivaten der höheren Fettsäuren, wie z.B. Metallstearate, amidierte Fettsäuren und Fettsäureester, und Fettalkoholen.

6. Verwendung einer thermoplastischen Polymermasse in einem Spritzguß-Verfahren gemäß den Ansprüchen 1 bis 5, dadurch gekennzeichnet, daß der Formmasse auch 0,01 bis 2 Gewichtsprozent einer festen Substanz mit einer durchschnittlichen Teilchengröße von kleiner als 5 μm beigemischt sind.

7. Verwendung einer thermoplastischen Polymermasse in einem Spritzguß-Verfahren gemäß den Ansprüchen 1 bis 5, dadurch gekennzeichnet, daß die Schmiermittel dem Polyamid zugegeben werden und zusammen mit dem segmentierten Mischpolymerisat darin vermischt werden.

**Revendications**

1. Utilisation d'une composition de polymère thermoplastique, dans un procédé de moulage par injection d'objets ayant une grande résistance aux chocs, la composition à mouler comprenant du polyamide 6 et/ou 66 dans lequel ou lesquels est dispersé un copolymère thermoplastique, présent en une quantité de 1 à 50% en poids, calculée sur les constituants polymères de la composition à mouler, utilisation caractérisée en ce que:

A Le copolymère est un copolymère segmenté polyéther/polyamide préparé par polycondensation d'une α,ω-poly(oxypropylène)diamine ayant un poids moléculaire compris entre 400 et 4 000 et d'une quantité essentiellement équimolaire d'acide dicarboxylique, et de monomères formateurs de polyamide, dont au moins 50% en poids consistent en du caprolactame, copolymère dans lequel les segments polyéthers forment 10 à 80% du poids, le copolymère ayant une viscosité relative comprise entre 2,0 et 3,5 quand on la mesure sur une solution de 1 g du polymère dans 100 g de m-crésol à 25°C; et

B La composition moulée comporte l'incorporation de 0,1 à 5% en poids d'un lubrifiant pour le moulage par injection de polyamide.

2. Utilisation d'une composition à base de polymère thermoplastique, dans un procédé de moulage par injection selon la revendication 1, caractérisée en ce que les segments polyamides du copolymère consistent en du polycaprolactame.

3. Utilisation d'une composition à base de polymère thermoplastique, dans un procédé de moulage par injection selon les revendications 1 et 2, caractérisée en ce que la partie polymère de la composition à mouler contient 1 à 25% en poids d'un copolymère segmenté et les segments polyéthers forment 30 à 70% du poids du copolymère.

4. Utilisation d'une composition à base de polymère thermoplastique, dans un procédé de moulage par injection selon les revendications 1 à 3, caractérisée en ce que l'α,ω-poly(oxypropylène)diamine à un poids moléculaire compris entre 1 500 et 2 500.

5. Utilisation d'une composition à base de polymère thermoplastique, dans un procédé de moulage par injection selon les revendications 1 à 4, caractérisée en ce que l'on utilise comme lubrifiant une substance choisie dans l'ensemble constitué par les acides gras supérieurs, les dérivés d'acides gras supérieurs, comme des stéarates de métaux, des acides gras amidés et des esters d'acides gras et d'alcools gras.

6. Utilisation d'une composition à base de polymère thermoplastique dans un procédé de moulage par injection selon les revendications 1 à 5, caractérisée en ce que la composition à mouler comporte

11

**0 060 579**

également l'incorporation, par mélangeage, de 0,01 à 2% en poids d'un solide ayant un diamètre particulaire moyen inférieur à 5 µm.

7. Utilisation d'une composition à base de polymère thermoplastique dans un procédé de moulage par injection selon les revendications 1 à 5, caractérisée en ce qu'on ajoute les lubrifiants au polyamide et on les y incorpore par mélangeage avec le copolymère segmenté.